# EUROPEAN PATENT APPLICATION

(11) **EP 1 293 707 A1**
(43) Date of publication of application: **19.03.2003**
(21) Application number: 99933208.3
(22) Date of filing: 30.07.1999
(51) Int. Cl.: F16H 37/02, F16H 3/74

(54) **RATIO DIFFERENTIAL CONTINUOUSLY VARIABLE TRANSMISSION**

(71) Applicant: Ikitake, Yosikane, Toride-shi, Ibaraki 302-0005 (JP)
(72) Inventor: Ikitake, Yosikane, Toride-shi, Ibaraki 302-0005 (JP)
(74) Representative: Cooper, John
(86) International application number: JP9904135
(87) International publication number: WO01009533

(57) **Abstract**

A gear transmission and a spherical surface frictional transmission are performed simultaneously in a power-transmission of a continuously variable speed transmission so as to utilize the high efficiency of the gear transmission and the continuously variable capability of the frictional transmission to the maximum. The continuous speed variation is made by a combination of a planetary gear speed reducer with a ratio(contact point radius ratio) dynamic frictional transmission device, a combination of the planetary gear speed reducer, a ratio dynamic frictional transmission device and a differential gear device, and a combination of a ratio dynamic frictional transmission device with a differential gear device. The transmission is suitable for use in those device requiring continuous speed variation such as cars, air conditioners, blowers and exhausters, pumps, industrial machinery and so on. When the transmission is assembled with a squirrel-cage motor in short-circuit operation which is simplest in structure and highest in efficiency among electric motor, its utility value is very large.

## Description

### Technical field

The purpose of this invention is to make the promotion of high efficiency and wide speed range of its highest efficiency of continuously variable speed transmission.

### Back ground technology

As a continuously variable speed transmission, there are utilizing liquid, gas or electricity, doing mechanical and so on.

As utilizing liquid, a torque converter spread recently, and adopted to most cars. Clutch and gear slowdown type become the minority. However, this torque converter is a combination of a pump and a waterwheel. Its efficiency falls because it is the product of efficiency of each pump and waterwheel. And speed range of the highest efficiency is small.

Besides, there is the utilizing a hydraulic pump and a hydraulic motor with a connection method in various ways. But its efficiency is low.

As utilizing electricity to control speed, there is methods of adjusting the direct current supply voltage system, second side resistance control of induction motor system, Kramer system, Scherbius system, inverter system of power supply frequency control and so on. But there is weak point that necessary care of a commutator brush, become major, ripple become a noise source of electronic machinery, torque is small in zero start and so on.

As mechanical speed control, there are friction system(V belt type, dynamical friction type, ring type and so on) and engage system. There are many its device that efficiency is low and structure is complicated.

### Disclosure of invention

This invention utilize simultaneously the high efficiency of the gear transmission and the continuously variable capability of the spherical surface friction wheel, and its purpose is to get high efficiency and wider speed range of its highest efficiency of continuously variable speed transmission.

On the combination of a gear transmission as subject of planetary gear mechanism and differential gear mechanism, and spherical surface frictional transmission for continuously variable speed, continuously variable speed of high efficiency is done by changing axis direction(ratio change) of a spherical surface friction wheel.

### Brief description of the drawings

Fig 1 shows cross section of enforcement example of claim 1.
Fig 2 shows cross section of enforcement example of claim 2.
Fig 3 shows cross section of enforcement example of claim 3.
Fig 4 shows cross section A-A of Fig 1, B-B of Fig 2, C-C of Fig 3.

### The best mode to carry out invention

I explain an enforcement example of this invention with drawing as follow.

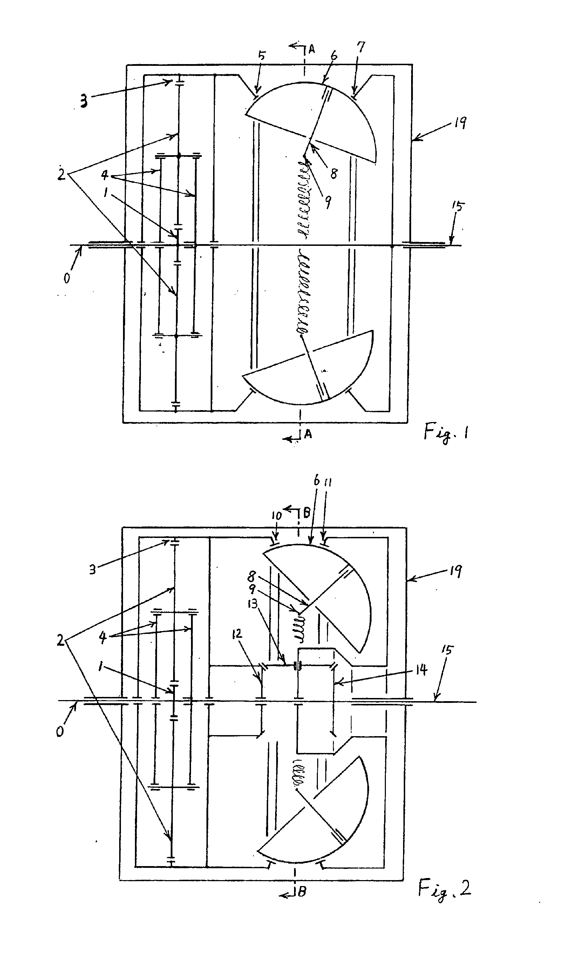

Fig 1 and 4 concern to claim 1, power tums planetary gear(2) by sun outside tooth gear(1) fixed with input axis(0), and it transmission to a sun inside tooth gear(3) and a carrier(4). Power transmitted to carrier(4) is transmitted to output axis(15) straightly. And power transmitted to sun inside tooth gear(3) is transmitted to output axis(15) through inside spherical surface ring(5), spherical surface friction wheel(6) and inside spherical surface ring(7).

When rotating number of sun outside tooth gear(1) is constant, the deducting remainder(if rotating direction is opposite mutually, it is sum number) of rotating number of sun inside tooth gear(3) and carrier(4) is constant. Rotating number ratio of sun inside tooth gear(3) to carrier(4) is rotating number ratio of inside spherical surface ring(5) to inside spherical surface ring(7). (19) is a transmission housing box.

The control of this output axes(15) rotating number is done by moving a control stick(18) to plumb to the paper plane through a lever(17) so as to move a direction of an axis(8) of a spherical surface friction wheel(6) into the fulcrum on axis(9). A spring(16) is a thing to press contact a spherical surface friction wheel(6) to an inside spherical surface ring(5) and an inside spherical surface ring(7) through two axis(9).

The vertical distance ratio from of the contact point of a spherical surface friction wheel(6) with inside spherical surface ring(5), to the contact point of a spherical surface friction wheel(6) with inside spherical surface ring(7), to an axis(8) is rotating number ratio of sun inside tooth gear(3) to carrier(4). When direction of an axis(8) goes through the contact point of a spherical surface friction wheel(6) and an inside spherical surface ring(7), output axis(15) rotating number becomes zero. In this case, because a spherical surface friction wheel(6) rotate around the contact point, there is fear to produce limited part wear, and it is necessary to avoid driving continuously of an output axis(15) rotating number zero without activation time.

Accordingly, this continuously variable speed transmission is suited for case to change flow quantity in the device which does not drive zero rotating number without activation time like blowers, exhausters, pump and so on.

Fig 2 and 4 concern to claim 2, planetary gear device is the same as Fig 1, but sun inside tooth gear(3), inside spherical surface ring(10) and an umbrella gear(12) is unit, and carrier(4), output axis (15) and an umbrella gear(14) is unit, again, a bearing part of a middle umbrella gear(13) and an inside spherical surface ring(11) is unit

Power turns planetary gear(2) by sun outside tooth gear(1) fixed to input axis(0), it transmit to a sun inside tooth gear(3) and a carrier(4). Power transmitted to a carrier(4) is transmitted to output axis (15) straightly. Power transmitted to sun inside tooth gear(3) is transmitted to an umbrella gear(12), rotating force of bearing part of middle umbrella gear(13) toward output axis(15), umbrella gear(14), output axis(15) course, and to an inside spherical surface ring(10), spherical surface friction wheel (6), an inside spherical surface ring(11), rotating force of bearing part of middle umbrella gear(13) toward output axis(15), umbrella gear(14), output axis(15) course.

The rotating number ratio of sun inside tooth gear(3) to carrier(4) is the rotating number ratio of an umbrella gear(12) to an umbrella gear(14). The rotating number ratio of an umbrella gear(12) to rotation of bearing part of an middle umbrella gear(13) toward output axis(15) is the rotating number ratio of inside spherical surface ring(10) to inside spherical surface ring(11), and it is same to the vertical distance ratio from of the contact point of inside spherical surface ring(10) with spherical surface friction wheel(6),to the contact point of spherical surface friction wheel(6) with inside spherical surface ring(11) to an axis (8).

The control of this output axis(15) rotating number is done by moving a control stick(18) to plumb to the paper plane through a lever(17) so as to move a direction of an axis(8) into the fulcrum on axis (9), same to an example of Fig 1.

Rotating number of an umbrella gear(14) and output axis(15) is deduction subtract rotating number of umbrella gear(12) from 2 times of rotating number of bearing part of middle umbrella gear(13) toward output axis(15). Accordingly, when rotating number of bearing part of an middle umbrella gear(13) toward output axis(15) is half of an umbrella gear(12) rotating number, output axis(15) rotating number is zero.

This continuously variable speed transmission is suited for the device which repeat standstill (rotating number zero), movement and back like cars.

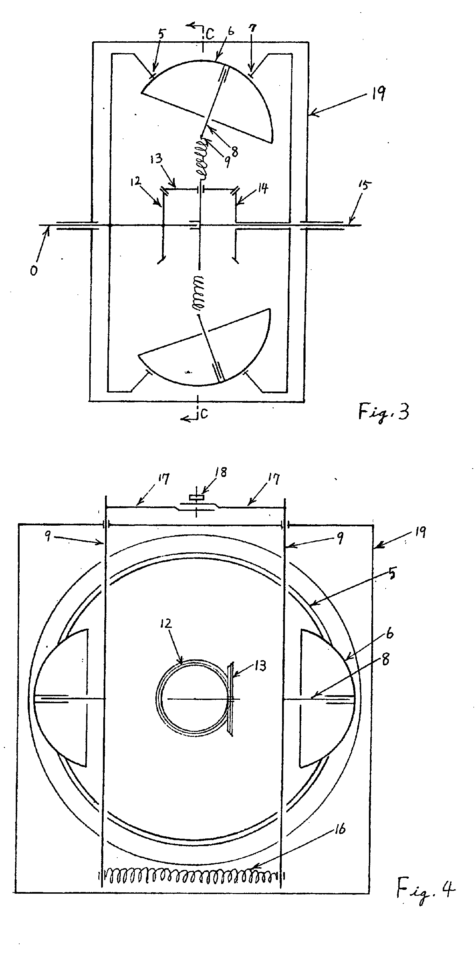

Fig 3 and 4 concern to claim 3, a input axis(0), an umbrella gear(12) and an inside spherical surface ring(5) is unit, and umbrella gear(14) and inside spherical surface ring(7) is unit, again bearing part of an middle umbrella gear(13) and output axis(15) is unit.

Power is transmitted to output axis(15) by transmission course of an umbrella gear(12) and rotating force of bearing part of an middle umbrella gear(13) toward output axis(15), and transmission course of an inside spherical surface ring(5), a spherical surface friction wheel(6), an inside spherical surface ring(7), an umbrella gear( 14) and rotating force of bearing part of an middle umbrella gear (13) toward output axis(15).

The control of output axis(15) rotating number is same to example of Fig 1 and 2.

When considered plus and minus of rotary direction, output axis(15) rotating number is half of the sum of rotating number of an inside spherical surface ring(5) and an inside spherical surface ring(7). Accordingly, when axis(8) direction is just middle of a ring(5) and a ring(7) (rotating number of both rings is the same and contrary direction), output axis(15) rotating number is zero. Where tilt an axis (8), output axis(15) begin to rotate positive or negative.

This continuously variable speed transmission is suited for the device repeating positive rotation, standstill and reverse frequently.

### Use possibility on industry

As above, depending on this invention, continuously variable speed transmission can do totally promoting transmit efficiency highly and speed range of high efficiency of transmission widely, while covering low transmitting power of friction transmission, by utilize parallel with high efficiency of gear transmit and continuously variable transmission of spherical surface friction wheel. It is suited for the device which needs continuously variable speed such as cars, conditioners, blowers and exhausters, pumps, industrial machinery and so on. And it is easy to do automatic variable speed.

### Explanation of sign in a drawing

- 0:: input axis
- 1:: sun outside tooth gear
- 2:: planetary gear
- 3:: sun inside tooth gear
- 4:: carrier
- 5:: inside spherical surface ring
- 6:: spherical surface friction wheel
- 7:: inside spherical surface ring
- 8:: axis of a spherical surface friction wheel
- 9:: fulcrum axis that changes direction of axis(8)
- 10:: inside spherical surface ring
- 11:: inside spherical surface ring
- 12:: umbrella gear
- 13:: middle umbrella gear
- 14:: umbrella gear
- 15:: output axis
- 16:: spring
- 17:: lever
- 18:: control stick
- 19:: transmission housing box

## Claims

1. Sun outside tooth gear of planetary gear device makes input axis, carrier of it makes output axis, the control of rotating number ratio of sun inside tooth gear to carrier is done by movement of the contact point which two inside spherical surface ring contact with spherical surface friction wheel, namely, change of axis direction of spherical surface friction wheel. The claim is the continuously variable speed device like it.

2. Sun outside tooth gear of planetary gear device makes input axis, carrier of it makes output axis, the control of rotating number ratio of sun inside tooth gear to carrier is done by change the rotating number ratio of inside spherical surface ring united with sun inside tooth gear to the another inside spherical surface ring united with bearing part of middle umbrella gear, using differential gear device consist of 2 umbrella gear and middle umbrella gear, namely, by change the axis direction of spherical surface friction wheel. The claim is the continuously variable speed device like it.

3. Between the inside spherical surface ring united with a input axis and an umbrella gear, and the another inside spherical surface ring united with another umbrella gear, I establish a differential gear, output axis and ratio dynamic spherical surface friction wheel.
Rotating number ratio of both inside spherical surface rings is changed by changing axis direction of spherical surface friction wheel. Then, it is possible to control the rotating number of bearing part of the middle umbrella gear(differential gear) toward output axis.
The claim is the continuously variable speed device like it.

## Amended claims

### Amended claims under Art. 19.1 PCT

**1.** Sun outside tooth gear of planetary gear device makes input axis, carrier of it makes output axis, the control of rotating number ratio of sun inside tooth gear to carrier is done by movement of the contact points which both the one of inside spherical surface ring united with sun inside tooth gear and the other of inside spherical surface ring united with output axis, contact with spherical surface friction wheel, namely, change of axis direction of spherical surface friction wheel is done by turning fulcrum axis united with this axis vertically. And it have a device of press contact force which is maintained moderately between spherical surface friction wheel and inside spherical surface rings. The claim is the continuously variable speed device like it.

**2.** Sun outside tooth gear of planetary gear device makes input axis, carrier of it makes output axis, the control of rotating number ratio of sun inside tooth gear to carrier is transmitted to differential gear device consist of two peace of umbrella gear united with each sun inside tooth gear and output axis and middle umbrella gear, and control of rotating number ratio of inside spherical surface ring united with bearing part of middle umbrella gear is done by change of axis direction of spherical surface friction wheel. The claim is the continuously variable speed device like it.

**3.** Between the inside spherical surface ring united with an input axis and an umbrella gear, and the another inside spherical surface ring united with another umbrella gear, I establish a differential gear united with output axis and ratio dynamic spherical surface friction wheel. Rotating number nitro of both inside spherical surface rings is changed by changing axis direction of spherical surface friction wheel. Then it is possible to control the rotating number of the differential gear toward output axis. The claim is the continuously variable speed device like it.
